# EUROPEAN PATENT SPECIFICATION

(11) **EP 0 428 408 B1**
(45) Date of publication and mention of the grant of the patent: **24.04.1996**
(21) Application number: 90312444.4
(22) Date of filing: 15.11.1990
(51) Int. Cl.: H04N 1/04

(54) **Automatic calibration of document reading apparatus**
Automatische Kalibrierung eines Vorlagenleseapparats
Calibrage automatique d'un appareil d'analyse de documents

(30) Priority: 15.11.1989 JP 296707/89
(43) Date of publication of application: 22.05.1991
(73) Proprietor: FUJITSU LIMITED, Kawasaki-shi, Kanagawa 211 (JP)
(72) Inventor: Sato, Teruyuki, Kawasaki-shi, Kanagawa 213 (JP)
(74) Representative: Fane, Christopher Robin King

(56) References cited:
- EP-A- 0 051 227
- EP-A- 0 197 734
- EP-A- 0 260 892
- DE-A- 2 513 042
- US-A- 4 605 970

## Description

The present invention relates to automatic calibration of document reading apparatus, and in particular to a method and apparatus for use, for example in facsimile or copying equipment, to adjust a read start position of a document to be read.

Facsimile and copy machines are widely used in various fields. In almost all of these devices, the document is automatically transported by feeding means from an insertion portion of the device and is read by an optical read means mounted therein. As described, for example, in EP-A-0051227, a detector is placed upstream of the feeding means to detect presence of a document and the timing of the read start by the read means is determined by applying a time delay after the document detection.

One example of a conventional document reading apparatus may be considered to include: feeding means, for moving such a document towards a predetermined reading location in the apparatus; a sensor device, disposed at a detecting location upstream of the said reading location, for detecting passage of a leading edge part of the document across the said detecting location in the direction towards the said reading location; optical reading means arranged to receive light, when the apparatus is in use, from that portion of the document which is currently at the said reading location and operative to produce electrical signals representative of such information on that portion; and control means, operative in dependence upon the said sensor device, and including a timing device, for initiating operation of the reading means upon expiry of a preset delay time after such passage of the said leading edge part across the said detecting location.

In general, the optical read means is constituted by some basic structural elements, i.e. a light source for irradiating the document, a reflection mirror for receiving a reflected light from the document, a collection lens for collecting the reflected light, and a CCD (charge coupled device) for converting the reflected light to an electrical signal.

There are, however, some mechanical installation errors caused by inevitable limitations in the precision of the manufacturing process employed to mount the elements constituting the optical read means.

These installation errors can result in read position errors when scanning a document. Accordingly, it has heretofore been attempted to precisely adjust the installation positions so as correct such mechanical installation errors.

Embodiments of first and second aspects of the present invention can provide an apparatus and a method, respectively, for automatically adjusting a read start position of a document to be read.

According to a first aspect of the present invention there is provided in combination with the document reading apparatus a calibration document bearing predetermined calibration information; and the apparatus is provided with calibration means having error measuring means connected to the said reading means and operable, when the calibration document is fed into the apparatus, to employ such electrical signals, representative of the said calibration information on that portion of the calibration document which is at the reading location upon expiry of a predetermined reference delay time after such passage of the said leading edge part across the detecting location, to measure displacement of that leading edge part from the said reading location upon the said expiry of the said predetermined reference delay time, and also having correction means operable to adjust the magnitude of the preset time delay in dependence upon the measurement result so that such displacement of the leading edge part of a document read in a subsequent reading operation is reduced as compared with the measured displacement.

In one embodiment, the calibration document has a cut portion provided at the center of the top of the document, so that the said leading edge part of the calibration document is upstream of the actual top of the document in the feeding direction, and the calibration information comprises two slanted reference lines each extending at a predetermined angle from the top of the cut portion, the two slanted reference lines being colored black.

According to a second aspect of the present invention there is provided a method of calibrating a document reading apparatus, for producing electrical signals representative of information present on a main face of a document, which apparatus includes feeding means, for moving such a document towards a predetermined reading location in the apparatus; a sensor device, disposed at a detecting location upstream of the said reading location, for detecting passage of a leading edge part of the document across the said detecting location in the direction towards the said reading location; optical reading means arranged to receive light, when the apparatus is in use, from that portion of the document which is currently at the said reading location and operative to produce electrical signals representative of such information on that portion; and control means, operative in dependence upon the said sensor device, and including a timing device, for initiating operation of the reading means upon expiry of a preset delay time after such passage of the said leading edge part across the said detecting location; characterised by: feeding a calibration document bearing predetermined calibration information into the apparatus; employing such electrical signals, representative of the said calibration information on that portion of the calibration document which is at the reading location upon expiry of a predetermined reference delay time after such passage of the said leading edge part across the detecting location, to measure displacement of that leading edge part from the said reading location upon the said expiry of the said predetermined reference delay time; and adjusting the magnitude of the preset time delay in dependence upon the measurement result so that such displacement of the leading edge part of a document read in a subsequent reading operation is reduced as compared with the measured displacement.

Reference will now be made, by way of example, to the accompanying drawings; in which:
Figs. 1 and 2 each show a schematic side-elevational view of optical read means for use in a document reader;
Fig. 3 is a side-elevational view of parts of a document reader;
Fig. 4 is a view for explaining data reading errors in the document reader shown in Fig. 3;
Fig. 5 is a schematic block diagram of apparatus for adjusting a read start position embodying the present invention;
Fig. 6A is a plan view of a part of a test chart for use with embodiments of the present invention;
Fig. 6B is a graph illustrating the amount of light received from the test chart of Fig. 6A at different positions across a light detecting element (CCD) in the optical reading means; and
Fig. 7 is a flowchart of a method for adjusting a read start position embodying the present invention.

Before describing the preferred embodiments, an explanation will be given of mechanical installation errors and problems caused thereby in an optical read means.

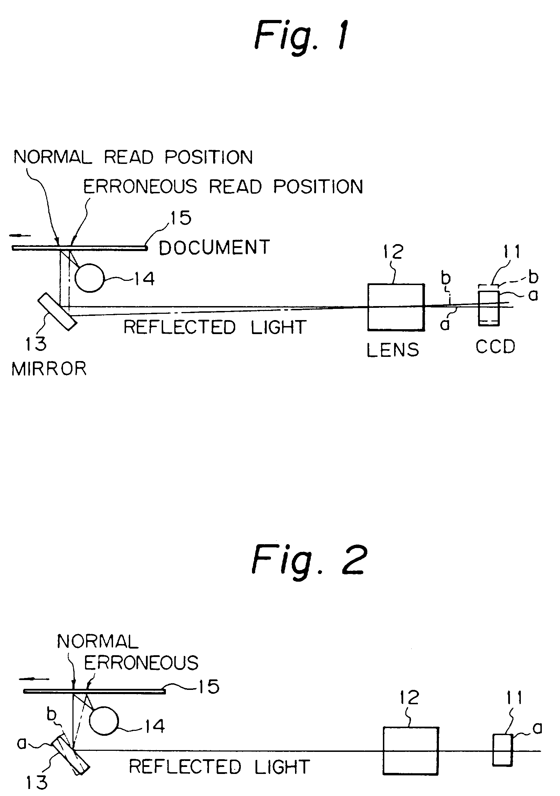

Figures 1 and 2 are views for explaining mechanical installation errors in an optical read means. In Figs. 1 and 2, reference number 11 denotes a CCD (charge coupled device) for converting a reflected light to an electrical signal, 12 a collection lens for collecting the reflected light, 13 a reflection mirror for changing a light path to the collection lens, and 14 a light source for irradiating a document 15.

The document to be read is transported in a direction shown by an arrow, this transportation direction of the document 15 being called a sub-scanning direction. The light source 14 irradiates the document 15, the light reflected from the document 15 is collected by the collection lens 12 through the reflection mirror 13, and the collected light is received by the CCD 11. The CCD 11 converts the reflected light to an electrical signal in a main-scanning direction, i.e., transversely to the transportation direction of the document 15.

In Fig. 1, when the CCD is mounted in the normal position (a), the read operation of the document 15 is started from the normal read position as shown by a solid line. However, when the CCD is erroneously mounted in the position (b), the read operation of the document 15 is started from the erroneous read position as shown by a dotted line.

In Fig. 2, when the reflection mirror 13 is mounted at the normal angle (a), the read operation of the document 15 is started from the normal read position as shown by a solid line. However, when the reflection mirror 13 is erroneously mounted at the position (b), the read operation of the document 15 is started from the erroneous read position as shown by a dotted line. Accordingly, an error in the read start position caused by the mechanical installation occurs in both cases.

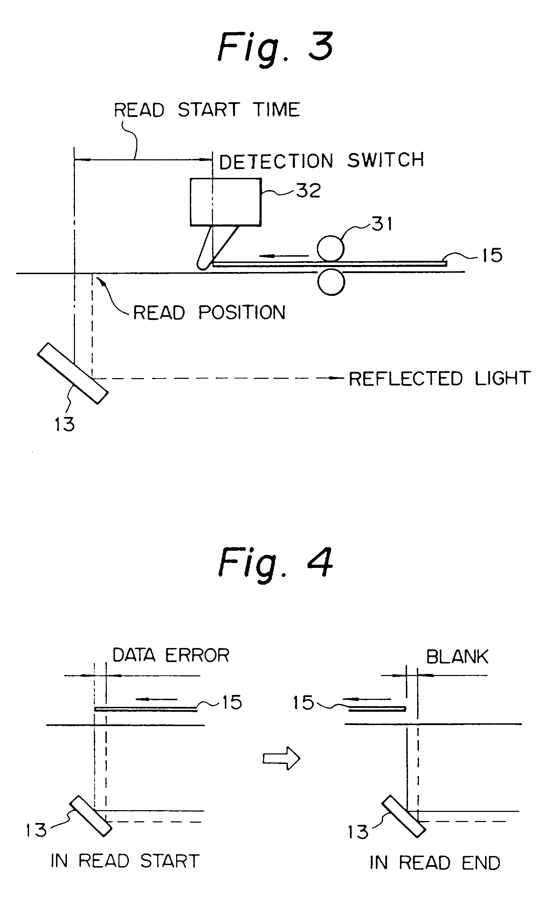

Figure 3 shows a schematic view of parts of a document reader. In Fig. 3, reference number 31 denotes a document transportation element (feeding means), and 32 a document detection switch (sensor device). When the document 15 is transported by the transportation element 31 in the direction of the arrow, the detection switch 32 detects the end of the document 15.

In the Figure 3 document reader, the read operation of the document 15 is started after the elapse of a predetermined time just after the detection of the document 15 by the detection element 32. That is, the time is counted after detection of the document 15, and the read operation is started after an elapse of the predetermined time. In this case, the read start time is fixedly defined based on the amount of movement of the document 15 just after the detection by the switch 32. As explained above, the read start position is defined by a fixed time.

Figure 4 is a view for explaining problems in the document reader shown in Fig. 3. When the mechanical installation error shown in Figs. 1 and 2 occurs in the CCD 11 and the reflection mirror 13, a data error occurs causing the top of the document not to be read, and a blank portion at the bottom of the document occurs at the end of the read operation. To reduce such problems, the installation positions of the CCD 11 and the reflection mirror 13 can be adjusted in the manufacturing process with a view to obtaining a correct normal read position.

In a facsimile apparatus, however, very high precision is required in the mechanical installation of the optical read means. For example, it is necessary to keep the installation error of the CCD lower than 0.1 mm in the manufacturing process. Further, it is very difficult to maintain uniform quality in the manufacturing process because of the fine adjustments required.

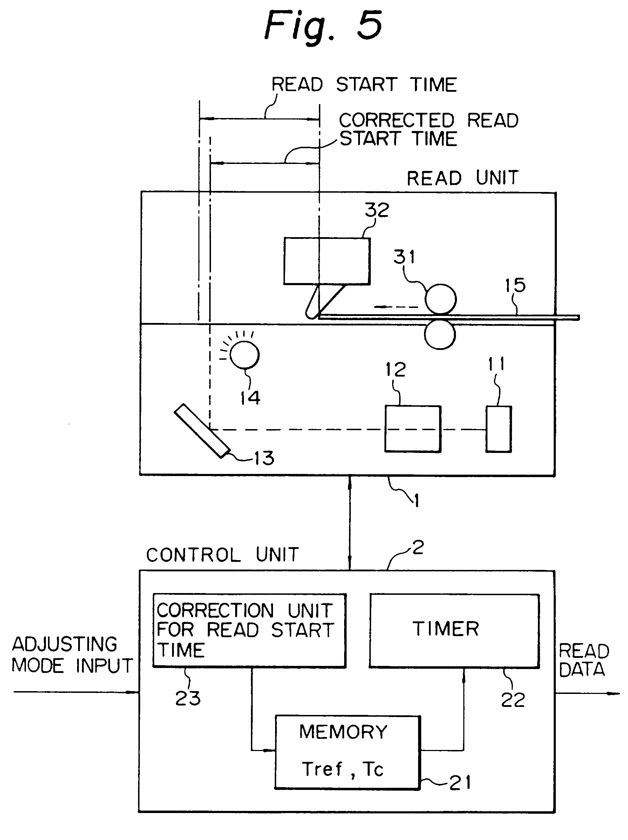

Figure 5 is a schematic block diagram of an apparatus for adjusting a read start position according to the present invention. The apparatus is constituted by a read unit 1 and a control unit 2. The mechanical structure of the read unit 1 is the same as the Figure 3 document reader i.e. the read unit (optical reading means) 1 is constituted by the CCD 11, the collection lens 12, the reflection mirror 13, the light source 14, the document transportation element (feeding means) 31 and the document detection switch (sensor device) 32.

In the Figure 5 document reader the read start time for the document is variable and is corrected by using a test chart (calibration document) in the read position adjusting mode prior to the actual read operation. That is, the read position adjusting mode is set in the manufacturing process or in a maintenance process of the apparatus to correct the reference read start time. In this case, the read start time is adjusted based on an error between an actual read line and a reference read line of the test chart. Accordingly, it is possible to easily coincide the read start position with the top of the document without fine mechanical adjustment of the CCD 11 and the reflection mirror 13 as explained in detail hereinafter.

Preferably, the control unit 2 is constituted by a microprocessor including a storage unit (memory) 21, a time counting unit (timer) 22 and a correction unit 23. The memory 21 stores a control program for adjusting the read start position and correcting the read start time. Further, the memory 21 stores a reference read start time and a corrected read start time as explained in detail hereinafter.

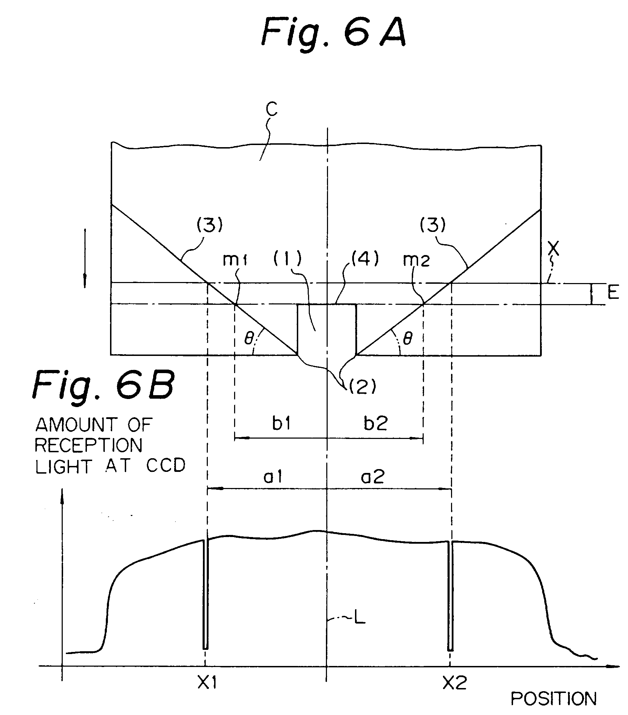

Figure 6A is a view for explaining a test chart for use with an embodiment of the present invention, and Figure 6B is a graph illustrating the relationship between an amount of received light and a position on the CCD.

In the Fig. 6A, the test chart C is inserted to the transportation element 31 in the direction of the arrow. As shown in the drawing, the test chart comprises a cut portion (1) in the center of the test chart C and the cut portion (1) has a rearward reference line (4). Further, the test chart comprises two slanted reference lines (3) each having an angle θ from forward points (2). These lines (3) are colored black.

When the test chart C is inserted into the transportation element 31, the rearward reference line (4) of the cut portion (1) is used as the reference read line and is detected by the detection switch 32. Accordingly, the rearward reference line (4) corresponds to the leading edge of the document 15. The slanted reference lines (3) serve as calibration information and are used for calculating the time of the error between rearward reference line (4) and the actual read line.

In Fig. 6B, the ordinate denotes the amount of the received light at the CCD and the abscissa denotes the position on the CCD. For example, when the actual read line is positioned to "X", the amount of light received by the CCD is considerably reduced at the positions labelled X1 and X2 because the reference read line is black so that the reflected light is reduced. In this case, when a pattern of Fig. 6B is displayed on a CRT, it is possible to detect distances a1 and a2 from a center line L of the CCD.

Further, points of intersection between the rearward line (4) and the reference lines (3) are given by "m1" and "m2", respectively, the distances "b1" and "b2" between the center line L and each point of intersection m1 and m2 being fixed.

Accordingly, the difference between a1 and b1 and the difference between a2 and b2 represent the error E between the actual read line X and the rearward reference line (4). Further, it is possible to detect a slanting of the document based on the difference between the distances a1 and a2.

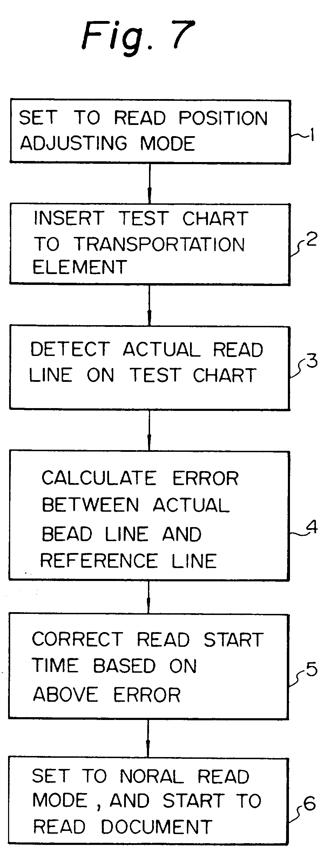

Figure 7 is a basic flowchart illustrating the operation of the control unit 2 shown in Fig. 5. First, the read position adjusting mode is set by an operator in the manufacturing process (step 1), and the test chart C is inserted into the transportation element 31 (step 2). As explained above, the control unit 2 is constituted by a microprocessor including the memory 21, the timer 22 and the correction unit 23. The memory 21 stores a control program for adjusting the read start position and correcting the read start time. Further, the memory 21 stores a reference read start time (predetermined reference delay time) and a corrected read start time (preset delay time).

When the document detection switch 32 detects the bottom reference line (4) of the test chart C (step 3), data regarding the reference read start time is read from the memory 21, and the timer 22 starts to count the reference read start time. When the count of the reference read start time is completed, the control unit 2 starts to read the data from the CCD 11. In this case, the first one line of data is read from the CCD 11 to analyze and correct in the correction unit 23 as follows.

In steps 4 and 5, calculation and correction of errors are performed as follows.

First, the correction unit 23 detects the points X1 and X2 each indicating the cross point between the reference line (3) and the actual read line X.

Next, the correction unit 23 detects the distances a1 and a2 from the center line L.

Next, the correction unit 23 performs following calculation.$\text{T1 = (b1 - a1)tanθ ö V}$$\text{T2 = (b2 - a2)tanθ ö V}$$\text{Tc = Tref ± (T1 + T2)/2}$ where, T1 and T2 are time lags,
b1, b2, and θ are fixed values as previously explained,
Tc is the corrected read start time,
Tref is the reference read start time, and
V is a transportation speed of the document.

Finally, the memory 21 stores the corrected read time Tc.

In the formulae (1) and (2), "(b1 - a1)tanθ" and "(b2 a2)tanθ" correspond to the error E between the rearward reference line (4) and the actual read line X shown in Fig. 6A. Accordingly, the transportation time, i.e., the time lag (i.e., T1 and T2) is given by a calculation of E/V.

As shown in formula (3), total time of the error is given by a mean value. Accordingly, the corrected read timeTc (i.e. the magnitude of the preset delay time) can be obtained by the formula (3).

As is obvious, when there is a difference between the time T1 and the time T2, this difference represents the slanting of the document.

In step 6, when the read position adjusting mode is completed, the apparatus is changed to a normal read operation mode to read the document as explained hereinafter. That is, the operation of the control unit 2 at the normal operation mode is explained hereinafter. As explained above, this mode is performed after completion of the read position adjusting mode. In Fig. 5, when the document 15 is inserted into the transportation element 31, the document 15 is automatically transported and detected by the detection switch 32. When the detection of the document is input to the control unit 2, the corrected read start time Tc is read out from the memory 21, and the timer 22 starts to count the corrected read start time Tc. When the corrected read start time Tc is completed, at the same time, the read operation from the CCD 11 is started.

In the Fig. 5 document reader, as explained above, the read position adjusting mode is selected during the manufacturing process of the apparatus, i.e. before any actual read operation (i.e., normal read operation) of the document. In the read position adjusting mode, the read start time is corrected by using the test chart so as to coincide the top of the document with the read start position at the actual read operation. Accordingly, it is not necessary to precisely adjust the mechanical installation position of the CCD and the reflection mirror.

Further, although one pattern of the test chart is shown in Fig. 6A as one example, it will be readily apparent that other suitable patterns can be used.

Document reading apparatus embodying the present invention can also be applied to a copy machine having the same optical read means as that of the facsimile apparatus described above.

## Claims

1. Document reading apparatus, for producing electrical signals representative of information present on a main face of a document, including:
feeding means (31), for moving such a document (15) towards a predetermined reading location in the apparatus;
a sensor device (32), disposed at a detecting location upstream of the said reading location, for detecting passage of a leading edge part of the document (15) across the said detecting location in the direction towards the said reading location;
optical reading means (11, 12, 13, 14) arranged to receive light, when the apparatus is in use, from that portion of the document (15) which is currently at the said reading location and operative to produce electrical signals representative of such information on that portion; and
control means (2), operative in dependence upon the said sensor device (32), and including a timing device (22), for initiating operation of the reading means upon expiry of a preset delay time (Tc) after such passage of the said leading edge part across the said detecting location;
characterised in that there is provided in combination with the said apparatus a calibration document (C) bearing predetermined calibration information (3);
and in that the apparatus is provided with calibration means having error measuring means (21,22,23) connected to the said reading means and operable, when the calibration document is fed into the apparatus, to employ such electrical signals, representative of the said calibration information on that portion of the calibration document which is at the reading location upon expiry of a predetermined reference delay time (Tref) after such passage of the said leading edge part (4) across the detecting location, to measure displacement of that leading edge part from the said reading location upon the said expiry of the said predetermined reference delay time, and also having correction means (23) operable to adjust the magnitude of the preset time delay (Tc) in dependence upon the measurement result so that such displacement of the leading edge part of a document read in a subsequent reading operation is reduced as compared with the measured displacement.

2. Document reading apparatus as claimed in claim 1, wherein the said calibration information comprises two lines (3), extending over the said main face of the calibration document (C), such that the distance between those lines, as measured perpendicular to the said direction, varies progressively in the said direction.

3. Document reading apparatus as claimed in claim 2, wherein the said leading edge part (4) of the calibration document (C) is recessed back from adjacent forward edge portions of that document, and the said two lines (3) extend, from the said forward edge portions respectively, at opposite sides of that leading edge part (4).

4. Document reading apparatus as claimed in claim 2 or 3, wherein each of the said two lines (3) is black.

5. Document reading apparatus as claimed in any preceding claim, wherein the said control means (2) include storage means (21) for storing the said predetermined reference delay time (Tref) and the said preset delay time (Tc).

6. A method of calibrating a document reading apparatus, for producing electrical signals representative of information present on a main face of a document, which apparatus includes feeding means (31), for moving such a document (15) towards a predetermined reading location in the apparatus; a sensor device (32), disposed at a detecting location upstream of the said reading location, for detecting passage of a leading edge part of the document (15) across the said detecting location in the direction towards the said reading location; optical reading means (11, 12, 13, 14) arranged to receive light, when the apparatus is in use, from that portion of the document (15) which is currently at the said reading location and operative to produce electrical signals representative of such information on that portion; and control means (2), operative in dependence upon the said sensor device (32), and including a timing device (22), for initiating operation of the reading means upon expiry of a preset delay time (Tc) after such passage of the said leading edge part across the said detecting location;
characterised by:
feeding a calibration document (C) bearing predetermined calibration information (3) into the apparatus;
employing such electrical signals, representative of the said calibration information on that portion of the calibration document which is at the reading location upon expiry of a predetermined reference delay time (Tref) after such passage of the said leading edge part (4) across the detecting location, to measure displacement of that leading edge part from the said reading location upon the said expiry of the said predetermined reference delay time; and
adjusting the magnitude of the preset time delay (Tc) in dependence upon the measurement result so that such displacement of the leading edge part of a document read in a subsequent reading operation is reduced as compared with the measured displacement.

7. A method of manufacturing a document reading apparatus, being apparatus as claimed in claim 1, which method includes a calibrating method as claimed in claim 6.

## Patentansprüche

1. Dokumentenlesevorrichtung zur Erzeugung von elektrischen Signalen, die auf einer Hauptseite eines Dokuments vorhandene Informationen darstellen, enthaltend:
eine Einzugseinrichtung (31) zur Bewegung eines solchen Dokuments (15) zu einem vorbestimmten Leseort in der Vorrichtung;
eine Sensoreinrichtung (32), die an einem Erfassungsort stromaufwärts des Leseortes angeordnet ist, zum Erfassen des Durchlaufens eines vorderen Randteiles des Dokuments (15) durch den Erfassungsort in Richtung auf den Leseort hin;
eine optische Leseeinrichtung (11, 12, 13, 14), die so ausgelegt ist, daß sie dann, wenn die Vorrichtung in Verwendung ist, Licht von demjenigen Abschnitt des Dokuments (15) empfängt, welcher gegenwärtig an dem Leseort befindlich ist, und so arbeitet, daß sie elektrische Signale erzeugt, die die Informationen auf diesem Abschnitt darstellen; und
eine Steuereinrichtung (2), die in Abhängigkeit von der Sensoreinrichtung (32) arbeitet und eine Zeitgebungseinrichtung (22) zum Auslösen des Betriebes der Leseeinrichtung nach dem Ablauf einer voreingestellten Verzögerungszeit (Tc) nach dem Durchtritt des vorderen Randteiles durch den Erfassungsort enthält;
dadurch gekennzeichnet, daß in Kombination mit der Vorrichtung ein Eichdokument (C) vorgesehen ist, das eine vorbestimmte Eichinformation (3) trägt;
und dadurch, daß die Vorrichtung mit einer Eicheinrichtung versehen ist, die eine Fehlermeßeinrichtung (21, 22, 23) hat, die mit der Leseeinrichtung verbunden ist und so betätigbar ist, daß sie dann, wenn das Eichdokument in die Vorrichtung eingezogen wird, die elektrischen Signale, die die Eichinformation auf demjenigen Abschnitt des Eichdokuments darstellen, der sich bei Ablauf einer vorbestimmten Referenzverzögerungszeit (Tref) nach dem Durchtritt des vorderen Randteiles (4) durch den Erfassungsort an dem Leseort befindet,verwendet, um die Versetzung des vorderen Randteiles von dem Leseort bei Ablauf der vorbestimmten Referenzverzögerungszeit zu messen, und die ferner eine Korrektureinrichtung (23) hat, die so betätigbar ist, daß sie die Größe der voreingestellten Zeitverzögerung (Tc) in Abhängigkeit von dem Meßergebnis einstellt, so daß diese Versetzung des vorderen Randteiles eines in einem nachfolgenden Lesevorgang gelesenen Dokuments im Vergleich zu der gemessenen Versetzung verringert wird.

2. Dokumentenlesevorrichtung nach Anspruch 1, bei welcher die Eichinformation zwei Linien (3) umfaßt, die sich über die Hauptfläche des Eichdokuments (C) erstrecken, so daß die Distanz zwischen diesen Linien, senkrecht zu der Richtung gemessen, progressiv in dieser Richtung variiert.

3. Dokumentenlesevorrichtung nach Anspruch 2, bei welcher der vordere Randteil (4) des Eichdokuments gegenüber benachbarten vorderen Randabschnitten dieses Dokuments zurückversetzt ist und die beiden Linien (3) sich jeweils von den vorderen Randabschnitten an einander gegenüberliegenden Seiten des vorderen Randteiles (4) erstrecken.

4. Dokumentenlesevorrichtung nach Anspruch 2 oder 3, bei welcher die beiden Linien (3) schwarz sind.

5. Dokumentenlesevorrichtung nach einem der vorstehenden Ansprüche, bei welcher die Steuereinrichtung (2) eine Speichereinrichtung (21) zum Speichern der vorbestimmten Referenzverzögerungszeit (Tref) und der voreingestellten Verzögerungszeit (Tc) enthält.

6. Verfahren zur Eichung einer Dokumentenlesevorrichtung zur Erzeugung von elektrischen Signalen, die eine Information darstellen, die auf einer Hauptfläche eines Dokuments vorhanden ist, welche Vorrichtung eine Einzugseinrichtung (31), um ein derartiges Dokument (15) zu einem vorbestimmten Leseort in der Vorrichtung zu bewegen; eine Sensoreinrichtung (32), die an einem Erfassungsort stromaufwärts des Leseortes angeordnet ist, um das Durchlaufen eines vorderen Randteiles des Dokumentes (15) durch den Erfassungsort in Richtung zu dem Leseort hin zu erfassen; eine optische Leseeinrichtung (11, 12, 13, 14), die so ausgelegt ist, daß sie dann, wenn die Vorrichtung in Verwendung ist, Licht von dem Abschnitt des Dokuments (15) empfängt, welcher sich gegenwärtig an dem Leseort befindet, und so arbeitet, daß sie elektrische Signale erzeugt, die die Informationen auf diesem Abschnitt darstellen; und eine Steuereinrichtung (2) enthält, die in Abhängigkeit von der Sensoreinrichtung (32) arbeitet und eine Zeitgebungseinrichtung (22) enthält, um den Betrieb der Leseeinrichtung nach dem Ablauf einer voreingestellten Verzögerungszeit nach dem Durchlaufen des vorderen Randteiles durch den Erfassungsort auszulösen;
gekennzeichnet durch:
Zuführen eines Eichdokuments (C), das vorbestimmte Eichinformationen (3) trägt, in die Vorrichtung;
Verwenden der elektrischen Signale, die die Eichinformation auf jenem Abschnitt des Eichdokuments darstellen, welcher sich nach Ablauf einer vorbestimmten Referenzverzögerungszeit (Tref) nach dem Durchlaufen des vorderen Randteiles (4) durch den Erfassungsort an dem Leseort befindet, um die Versetzung des vorderen Randteiles von dem Leseort nach dem Ablauf der vorbestimmten Referenzverzögerungszeit zu messen; und
Einstellen der Größe der voreingestellten Zeitverzögerung (Tc) in Abhängigkeit von dem Meßergebnis, so daß diese Versetzung des vorderen Randteiles eines Dokumentes, welches in einem nachfolgenden Lesevorgang gelesen wird, im Vergleich mit der gemessenen Versetzung verringert wird.

7. Verfahren zur Herstellung einer Dokumentenlesevorrichtung, welche eine in Anspruch 1 beanspruchte Vorrichtung ist, welches Verfahren ein in Anspruch 6 beanspruchtes Eichverfahren enthält.

## Revendications

1. Appareil de lecture de document, servant à produire des signaux électriques représentatifs de l'information présente sur une face principale d'un document, comportant :
un moyen d'alimentation (31), servant à déplacer ce document (15) vers un emplacement de lecture prédéterminé de l'appareil ;
un dispositif capteur (32), disposé en un emplacement de détection situé en amont dudit emplacement de lecture et servant à détecter le passage d'une partie bord antérieur du document (15) par ledit emplacement de détection dans la direction allant vers ledit emplacement de lecture ;
un moyen de lecture optique (11,12,13,14) destiné à recevoir de la lumière, lorsque l'appareil est en utilisation, de la part de la partie du document (15) qui est présentement audit emplacement de lecture et ayant pour fonction de produire des signaux électriques représentatifs de cette information sur cette partie ; et
un moyen de commande (2), agissant en fonction dudit dispositif capteur (32) et comportant un dispositif de positionnement temporel (22), afin de faire commencer l'action du moyen de lecture à l'expiration d'un retard préfixé (Tc) après le passage de ladite partie bord antérieur par ledit emplacement de détection ;
caractérisé en ce qu'il est prévu, en combinaison avec ledit appareil, un document d'étalonnage (C) portant une information d'étalonnage prédéterminée (3) ;
et en ce que l'appareil est doté d'un moyen d'étalonnage possédant un moyen de mesure d'erreur (21, 22, 23) connecté audit moyen de lecture et ayant pour fonction, lorsqu'on fait avancer le document d'étalonnage dans l'appareil, d'employer les signaux électriques, représentatifs de ladite information d'étalonnage sur la partie du document d'étalonnage qui se trouve à l'emplacement de lecture au moment de l'expiration d'un retard de référence prédéterminé (Tref) après le passage de ladite partie bord antérieur (4) par l'emplacement de détection, pour mesurer l'écart de cette partie bord antérieur vis-à-vis dudit emplacement de lecture au moment de ladite expiration dudit retard de référence prédéterminé, et possédant aussi un moyen de correction (23) ayant pour fonction d'ajuster l'amplitude du retard préfixé (Tc) en fonction du résultat de mesure de façon que l'écart de la partie bord antérieur d'un document lu lors d'une opération de lecture ultérieure soit diminué par comparaison avec l'écart mesuré.

2. Appareil de lecture de document selon la revendication 1, où ladite information d'étalonnage comprend deux lignes (3), s'étendant sur ladite face principale du document d'étalonnage (C), telles que la distance entre ces lignes, mesurée perpendiculairement à ladite direction, varie progressivement dans ladite direction.

3. Appareil de lecture de document selon la revendication 2, où ladite partie bord antérieur (4) du document d'étalonnage (C) est découpée en retrait par rapport à des parties adjacentes de bord avant de ce document, et lesdites deux lignes (3) s'étendent, respectivement depuis lesdites parties de bord avant, de part et d'autre de la partie bord antérieur (4).

4. Appareil de lecture de document selon la revendication 2 ou 3, où chacune desdites deux lignes (3) est noire.

5. Appareil de lecture de document selon l'une quelconque des revendications précédentes, où ledit moyen de commande (2) comporte un moyen de mémorisation (21) servant à mémoriser ledit retard de référence prédéterminé (Tref) et ledit retard préfixé (Tc).

6. Procédé d'étalonnage d'un appareil de lecture de document, servant à produire des signaux électriques représentatifs de l'information présente sur une face principale d'un document, lequel appareil comporte un moyen d'alimentation (31) servant à déplacer un tel document (15) vers un emplacement de lecture prédéterminé de l'appareil ; un dispositif capteur (32), disposé en un emplacement de détection situé en amont dudit emplacement de lecture et servant à détecter le passage d'une partie bord antérieur du document (15) par ledit emplacement de détection dans la direction allant vers ledit emplacement de lecture ; un moyen de lecture optique (11, 12, 13, 14) destiné à recevoir de la lumière, lorsque l'appareil est en utilisation, de la part de la partie du document (15) qui est présentement audit emplacement de lecture et ayant pour fonction de produire des signaux électriques représentatifs de cette information sur cette partie ; et un moyen de commande (2), agissant en fonction dudit dispositif capteur (32) et comportant un dispositif de positionnement temporel (22), afin de faire commencer l'action du moyen de lecture à l'expiration d'un retard préfixé (Tc) après le passage de ladite partie bord antérieur par ledit emplacement de détection ;
caractérisé par les opérations suivantes :
faire avancer dans l'appareil un document d'étalonnage (C) portant une information d'étalonnage prédéterminée (3) ;
employer les signaux électriques représentatifs de ladite information d'étalonnage sur la partie du document d'étalonnage qui se trouve à l'emplacement de lecture au moment de l'expiration d'un retard de référence prédéterminé (Tref) après le passage de ladite partie bord antérieur (4) par l'emplacement de détection, pour mesurer l'écart de cette partie bord antérieur vis-à-vis dudit emplacement de lecture au moment de ladite expiration dudit retard de référence prédéterminé ; et
ajuster l'amplitude du retard préfixé (Tc) en fonction du résultat de mesure de façon que l'écart de la partie bord antérieur d'un document lu lors d'une opération de lecture suivante soit diminué par comparaison avec l'écart mesuré.

7. Procédé de fabrication d'un appareil de lecture de document, qui est l'appareil tel que revendiqué dans la revendication 1, ce procédé comportant un procédé d'étalonnage tel que revendiqué dans la revendication 6.
